Europäisches Patentamt

European Patent Office

Office européen des brevets

(11) Numéro de publication: **0 375 526**
**A1**

## DEMANDE DE BREVET EUROPEEN

(21) Numéro de dépôt: **89403510.4**

(22) Date de dépôt: **15.12.89**

(51) Int. Cl.5 **B23B 51/04**

(30) Priorité: **19.12.88 FR 8816734**

(43) Date de publication de la demande:
**27.06.90 Bulletin 90/26**

(84) Etats contractants désignés:
**CH DE ES GB IT LI**

(71) Demandeur: **AEROSPATIALE Société
Nationale Industrielle
37, Boulevard de Montmorency
F-75781 Paris Cédex 16(FR)**

(72) Inventeur: **Serre, René
6 rue de Neunkirchen
F-78200 Mantes La Ville(FR)**

(74) Mandataire: **Mongrédien, André et al
c/o SOCIETE DE PROTECTION DES
INVENTIONS 25, rue de Ponthieu
F-75008 Paris(FR)**

(54) **Outil à trépaner de précision pour des panneaux en matériau sandwich.**

(57) L'invention permet d'usiner des trous de grande
précision dans des panneaux composites en matériau sandwich sans détérioration des faces avant et
arrière des panneaux.

L'outil se compose principalement d'un corps
tubulaire (2) à l'extrémité inférieure duquel se trouve
des dents (10, 12). Ces dents sont d'une très faible
épaisseur ($E_1$, $E_2$). Cette particularité peut être complétée par une très grande profondeur de dents, un
très faible angle de dépouille externe (B). L'utilisation
de l'outil avec une très forte vitesse d'avance permet
de découper de manière très nette un trou par
trépanage dans le matériau. La carotte (22) formée
par ce trépanage est facilement extraite, grâce à une
excentration du diamètre intérieur (d) qui crée un jeu
J entre la carotte (22) et le corps (2) de l'outil.

Application aux panneaux en matériau sandwich,
tels que ceux utilisés dans l'industrie aéronautique.

FIG. 1

## OUTIL A TREPANER DE PRECISION POUR DES PANNEAUX EN MATERIAU SANDWICH

L' invention concerne le domaine du perçage des matériaux composites, tels que les panneaux en matériau sandwich, et plus particulièrement ceux composés de peaux et de structure alvéolaire, tels que le "nid d'abeilles", métallique ou composite.

L' invention trouve son application, entre autres, dans le domaine aéronautique.

Dans ce domaine, l'emploi de structures en matériau sandwich est de plus en plus fréquent pour des raisons de gain de masse du matériel volant. En effet, ce type de matériau est très souvent utilisé pour constituer les cloisons et les éléments constitutifs de l'intérieur des cabines des aéronefs. Etant donné que le matériel embarqué doit être fixé de façon très sûre à la structure des cabines, les liaisons par vissage sont fréquemment employées. Un tel choix de fixation implique l'utilisation d'un insert positionné dans chaque trou pratiqué dans les panneaux. Pour des raisons de tenue mécanique et de précision des fixations, ces trous doivent être très précis et leur réalisation ne doit impliquer aucun endommagement structural du trou. En effet, le perçage des panneaux sandwich entraîne trop facilement un phénomène de délaminage des peaux, et un arrachement ou un écrasement des structures "nid d'abeilles", provoquant le décollage de la peau arrière.

On connaît par la demande de brevet européen A-1-0 105 935, un type de fraise destiné au perçage des matériaux composites. Elle comprend principalement un corps cylindrique autour d'un axe de rotation, des moyens de fixation de la fraise sur une machine à broche tournante, et des dents disposées à l'extrémité du corps cylindrique. Ces dents ont une forme analogue aux dents des fraises à surfacer. Par contre, elles ne travaillent pas de la même manière. En effet, l'avance de la fraise dans le panneau à usiner se fait selon une direction parallèle à l'axe de rotation de la fraise. Les dents usinent donc le panneau par enlèvement de copeaux de manière frontale par rapport à la direction d'avance de la fraise. Plus précisément, c'est l'arête qui s'étend le long du rayon de la fraise qui découpe le copeau. La longueur de cette arête correspond à l'épaisseur de la dent.

Lorsqu'une telle fraise est utilisée pour usiner des panneaux en matériau sandwich, tels que ceux évoqués précédemment, on observe des phénomènes d'écrasement de la structure en "nid d'abeilles" et de délaminage au moment du débouchage dans le cas de peaux en composite. Ceci est dû principalement à l'épaisseur, ou la largeur, de la dent. Ceci s'explique par le fait que, la fraise étant mise en rotation, les dents exercent une pression sur le panneau. Cette pression est trop faible pour que le pouvoir de pénétration de la fraise soit suffisant pour entamer un usinage correct. Il s'ensuit donc une détérioration du panneau et éventuellement un usinage imprécis, dont l'état de surface n'est pas satisfaisant, compte tenu des différents arrachages de matériau sur les parois du trou ainsi obtenu.

Ces fraises selon l'art antérieur ont également tendance à refouler les copeaux de matériau, qui s'accumulent au fond de la trace de l'outil. Il s'ensuit un bourrage et un refoulement du matériau usiné qui nuisent à la qualité de l'usinage.

L'outil selon l'invention vise à éviter de tels inconvénients, pour permettre de réaliser des trous de grande précision, en toute sécurité dans des structures en matériau sandwich, même si les matériaux en peaux et "nid d'abeilles" sont extrêmement fins, de l'ordre de quelques dixièmes de millimètre.

A cet effet, l'objet de l'invention est un outil à trépaner de précision pour panneaux en matériau sandwich, ayant un axe de rotation, un corps tubulaire ayant la forme globale d'un cylindre de révolution autour de l'axe de rotation, des moyens de fixation de l'outil sur une machine à trépaner ou à percer solidaires du corps par une première extrémité du corps, et des dents placées à une deuxième extrémité du corps, dans le prolongement du corps et possédant des arêtes coupantes pour usiner le matériau sandwich, chaque dent possédant une largeur de coupe déterminée.

L'outil se caractérise en ce que la largeur de coupe de chaque dent et très faible, ceci afin d'éviter un usinage par enlèvement frontal de copeaux.

Plusieurs caractéristiques de l'outil améliorent son efficacité. En particulier, chaque dent a une profondeur de dent égale à au moins 5 mm. Ceci favorise un usinage par cisaillement obtenu en combinaison avec une grande vitesse d'avance de l'outil en profondeur.

De manière préférentielle, la forme de la dent a une première partie parallèle à l'axe de rotation sur au moins 1 mm de longueur, suivie d'une deuxième partie se prolongeant sur le corps et formant un faible angle de dépouille afin d'éviter le frottement contre le matériau du panneau.

Un autre aspect de l'invention est que l'ensemble des dents et du corps définit un diamètre intérieur excentré de quelques dixièmes de millimètre par rapport à l'axe de rotation, afin de faciliter la libération de la carotte résultant de l'opération de trépanage.

Dans une réalisation principale de l'invention, l'outil est en acier rapide du type M35.

Dans cette réalisation, l'outil reçoit un revêtement en nitrure de titane, afin d'améliorer sa dureté.

Dans une première réalisation des moyens de fixation, ceux-ci sont constitués d'un manchon taraudé destiné à recevoir un cône de fixation du type cône morse dans une broche de machine-outil, ou une queue cylindrique pour fixation dans un mandrin sur une machine-outil ou sur une simple perceuse à main.

Dans une deuxième réalisation de ces moyens de fixation, ceux-ci sont constitués d'un manchon fileté destiné à recevoir un cône de fixation sur une butée micrométrique, l'angle du cône de fixation étant à 120°.

L'invention et ses différentes caractéristiques seront mieux comprises à la lecture de la description qui suit, et qui est annexée des figures représentant respectivement :

- figure 1, une coupe longitudinale de l'outil selon l'invention ;

- figure 2, une vue de côté des dents de l'outil selon l'invention ;

- figure 3, une vue de face d'une dent de l'outil selon l'invention ;

- figure 4, une vue, avec coupe partielle, montrant une première réalisation des moyens de fixation de l'outil selon l'invention ;

- figure 5, une vue, avec coupe partielle, montrant une deuxième réalisation des moyens de fixation de l'outil selon l'invention ;

- figure 6, l'outil selon l'invention équipé d'un accessoire.

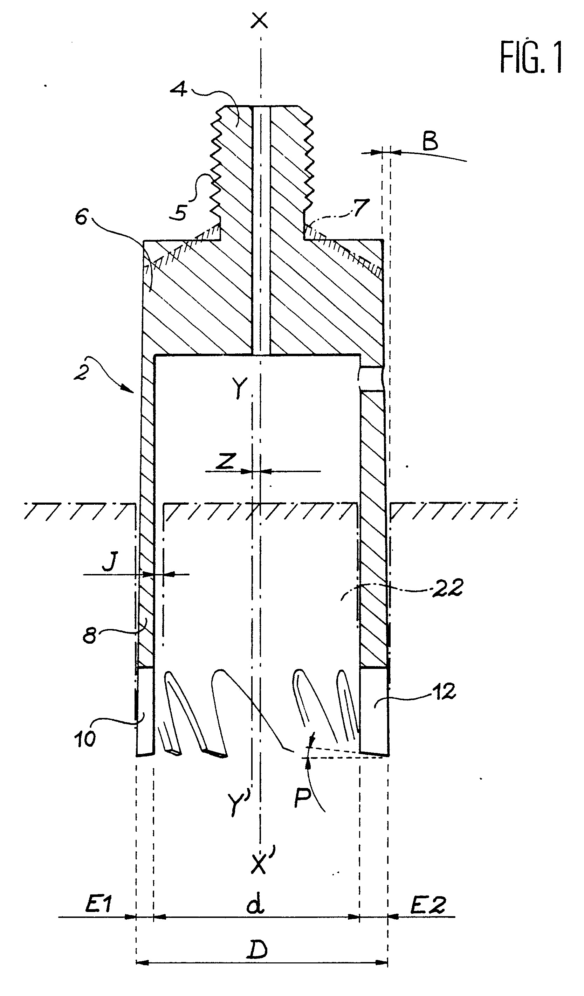

La description générale de l'outil à trépaner selon l'invention se fait en référence à la figure 1. Compte tenu de la grande diversité de trous pouvant être obtenus à l'aide de l'outil selon l'invention, l'échelle de cette figure n'est pas à prendre en considération de façon précise. On peut même considérer qu'elle représente un outil avec une échelle égale à 2,5. L'outil comporte essentiellement un corps 2 tubulaire, des moyens de fixation 4 de l'outil sur la broche d'une machine tournante et une série de dents 10 et 12. La forme extérieure de l'outil, est une surface externe 14 de forme presque cylindrique d'axe X, X', qui est également l'axe de rotation de l'outil. A une première extrémité 6 du corps 2, sont prévus des moyens de fixation 4 de l'outil sur une machine, telle qu'une machine à trépaner ou à percer. Ces moyens de fixation 4 sont solidaires du corps 2 et peuvent être munis d'un filetage 5, permettant à l'outil d'être vissé dans un élément de fixation rapporté à la broche de la machine-outil. Dans le cas d'une fixation avec une butée micrométrique, la première extrémité 6 du corps 2 se termine par une surface d'appui 7 inclinée à 120°, représentée en traits mixtes.

A la deuxième extrémité 8 du corps 2, se trouvent les dents 10 et 12 constituant les éléments d'usinage de l'outil. Ces dents se trouvent dans le prolongement de la partie en forme de tube du corps 2.

En comparaison du diamètre extérieur D de l'ensemble des dents 10 et 12, les épaisseurs $E_1$ et $E_2$ de ces dents 10 et 12 sont très faibles, c'est-à-dire de l'ordre du millimètre. Ceci constitue la caractéristique technique la plus importante de l'outil selon l'invention. En effet, la qualité de l'usinage obtenue est fonction de la facilité avec laquelle l'outil pénètre dans le matériau. Etant donné cette faible épaisseur de dents, on comprend que, l'outil tournant autour de l'axe X, X' et avançant dans une direction parallèle à cet axe X, X', la force de pénétration de l'outil engendre une pression sur le panneau à usiner très importante. En effet, la faible épaisseur des dents définit une surface en forme de couronne relativement faible sur le panneau et permet de créer une pression importante et localisée sur le panneau.

D'autres caractéristiques techniques relatives à la forme des dents contribuent à améliorer l'efficacité de la fraise.

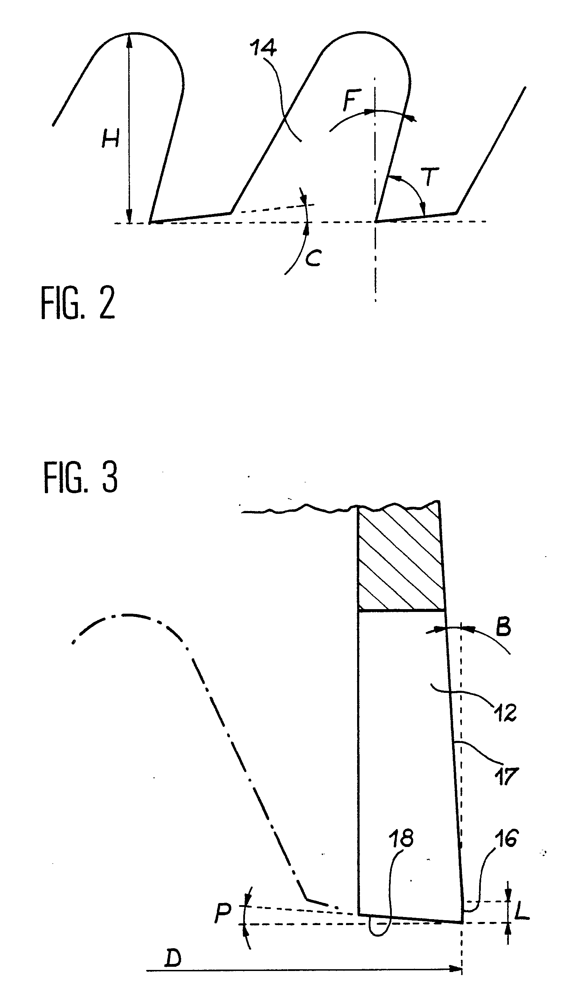

Selon l'invention, la pénétration se fait à grande vitesse d'avance de l'outil. En conséquence, et en référence à la figure 2 représentant deux dents de l'outil de profil, la hauteur H de dégagement entre deux dents est plus importante que dans les outils utilisés dans l'art antérieur. La hauteur H minimale est de 5 mm. On voit sur cette figure qu'elle permet d'obtenir un espace de dégagement 14 important entre les deux dents, facilitant le cisaillement du nid d'abeilles.

On peut également remarquer que la dent possède un angle de dépouille vis-à-vis de la direction de coupe, cet angle ayant une valeur de quelques degrés, par exemple 8°. La dent possède également un angle d'affûtage F de quelques degrés, l'angle de taille T de la dent étant de l'ordre de 70°.

Pour faciliter la pénétration de l'outil dans les panneaux en matériau sandwich, la face externe 14 des dents 10 et 12, et du corps 2 n'est pas une surface cylindrique de révolution autour de l'axe X, X' de l'outil, mais est un cône de conicité B très légère, le diamètre maximal extérieur D de l'outil étant obtenu à l'extrémité des dents 10 et 12. Cette conicité B est en fait une dépouille pour l'outil vis-à-vis de la direction de pénétration. Elle permet d'éviter les frottements entre la surface externe 14 de l'outil et les parois du trou obtenu dans le matériau sandwich. Cet angle B est de préférence égal à 2° ou d'une conicité égale à 0,02, comme représenté sur la figure 3. Toutefois, la surface externe 14 est parallèle à l'axe de rotation X, X' de l'outil, à l'extrémité des dents 12, sur une petite partie 16. Ceci, pour faciliter l'obtention d'un meilleur état de surface. La longueur L de cette partie 16 est d'environ 1 mm.

Toujours en référence à la figure 3, l'arête transversale de coupe 18, s'étendant sur les épaisseurs $E_1$ et $E_2$ des dents n'est pas perpendiculaire à l'axe de rotation X, X', mais légèrement inclinée d'un angle de pente P. Cette inclinaison P se fait vers l'intérieur de l'outil au fur et à mesure que l'on se rapproche de l'axe de rotation X, X', et est de l'ordre de 10°.

L'arête transversale de coupe 18 n'est pas obligatoirement perpendiculaire à la direction de rotation des dents 10 et 12 autour de l'axe X, X', c'est-à-dire que son prolongement ne passe pas obligatoirement par l'axe de rotation X, X'.

En considérant de nouveau la figure 1, on constate que le diamètre intérieur d de la partie de forme générale cylindrique 8 du corps 2 est excentré par rapport à l'axe de rotation X, X' et par rapport au diamètre externe D. De ce fait, les dents 10 et 12 ont des épaisseurs différentes. Les deux dents représentées sur la figure ont des épaisseurs respectivement égales à $E_1$ et $E_2$. L'axe de ce diamètre intérieur d excentré est l'axe Y, Y' parallèle à l'axe de rotation X, X' et distant de celui-ci d'une excentration Z d'environ 0,3 mm. Cette excentration permet, pendant l'usinage obtenu par rotation de l'outil, de faire apparaître entre la partie en forme de tube 8 et la carotte 22 formée par l'usinage, un jeu J correspondant à l'excentration Z des deux axes X, X' et Y, Y'. Ce jeu permet de libérer facilement la carotte 22 de l'intérieur de l'outil, après l'usinage. En effet, compte tenu de la structure des matériaux composites et en particulier des matériaux sandwich, ceux-ci ont tendance à épouser parfaitement la forme intérieure de l'outil et leur extraction devient problématique. Le jeu J permet d'éviter cet inconvénient.

Pour assurer la stabilité et la solidité mécanique de l'outil, ainsi que la dureté et l'efficacité des dents, l'ensemble de l'outil est fabriqué en acier rapide M35, dont la norme est Z85WDKV06050502. Un tel outil peut être utilisé pour l'élaboration des trous dans des matériaux sandwich à base d'aluminium.

L'outil peut également être doté d'un revêtement en nitrure de titane. Un tel revêtement est obtenu en évaporant du titane dans une chambre sous vide dans laquelle on amène en même temps un gaz de réaction. Le produit de réaction, en l'occurrence le nitrure de titane, se dépose sur l'outil pour y former une couche très mince (2 à 4 micromètres) et de très bonne adhérence. La température de l'opération est inférieure à 500°C. Ce revêtement apporte une très grande dureté à l'outil (2 300 HV), cette dureté étant comparable à celle des outils en carbure, et ceci sans fragiliser ni déformer l'outil. Une telle réalisation permet de fabriquer des outils à trépaner de très faible épaisseur de dents et d'usiner des matériaux à base de carbone et de Kevlar.

Un tel outil permet le perçage de structures sandwich de différentes compositions : les structures avec nid d'abeilles en aluminium avec un placage de carbone, d'aluminium ou de Kevlar. Le perçage est obtenu directement, en une passe, avec une précision de $5.10^{-2}$ mm. Cette précision est obtenue tout en éliminant l'écrasement de la structure en nid d'abeilles, le décollage et le délaminage, lors de la pénétration de l'outil.

Ces résultats avantageux sont obtenus grâce à l'usinage qui s'effectue beaucoup plus en cisaillement qu'en fraisage par la face frontale de coupe des dents. Ce phénomène de cisaillement est obtenu grâce à la profondeur de l'espace de dégagement 14 entre chaque dent, à la très faible épaisseur des dents, donc à la très faible surface d'attaque des dents, à l'inclinaison de l'arête transversale de coupe 18, et en particulier au moyen d'une vitesse d'avance ou de pénétration très importante de l'outil dans le matériau. Cette vitesse peut dépasser plusieurs mètres par minute. On comprend alors que l'outil travaille plus comme un couteau ou une paire de ciseaux découpant un matériau cartonné, que comme un outil de fraisage avançant lentement dans la matière et ne se frayant un passage que par enlèvements successifs des copeaux.

Plusieurs réalisations des moyens de fixation sur une machine-outil à broche tournante sont possibles avec l'outil à trépaner selon l'invention.

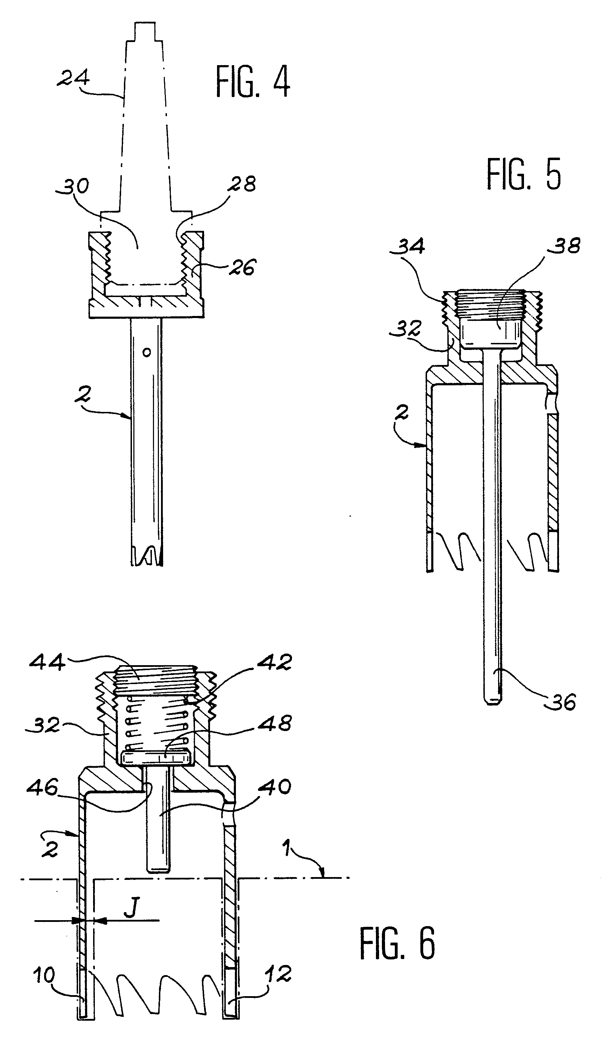

En référence à la figure 4, ces moyens de fixation sont principalement constitués d'un manchon 26 de grande largeur fixé au corps 2 de l'outil. Ce manchon 26 est équipé d'un trou taraudé 28, destiné à recevoir l'extrémité filetée 30 d'une queue cylindrique ou d'un cône morse 24 de fixation d'un outillage dans la broche d'une machine-outil. Cette réalisation est valable avec plusieurs sortes de cônes morses, tels que les cônes à tenons, ou à trous filetés. On peut même envisager de visser dans le taraudage 28 des moyens de fixation 26, une queue cylindrique.

Sur la figure 5, les moyens de fixation sont constitués d'un téton 32, fixé au corps 2 de l'outil. Par contre, ce téton 32 possède un filetage externe 34, destiné à être vissé dans le trou taraudé d'un élément de fixation sur une broche de machine-outil. Le trou du téton 32 peut également recevoir par vissage la tête 38 d'une tige de profondeur 36, destinée à être utilisée en combinaison avec une perceuse à butée micrométrique.

L'accessoire représenté avec l'outil selon l'invention sur la figure 6 est un éjecteur de carotte.

Dans ce cas, l'outil est monté par l'intermédiaire du téton 32 sur un élément rapporté de fixation 44. A l'intérieur du trou du téton 32, est placé un ressort 42, en butée par une première extrémité sur l'élément rapporté de fixation 44. La deuxième extrémité de ce ressort 42 repousse la tête 48 d'une tige d'éjection 40, traversant l'extrémité du corps 2 au moyen d'un trou débouchant 46. De ce fait, lorsque l'outil commence à traverser le panneau 1 à usiner, la partie de matériau, appelée carotte 22, se trouvant à l'intérieur de l'outil repousse en fin d'usinage la tige 40 débouchant du trou 46 du corps 2. A la fin de l'usinage, dans le cas d'un trou débouchant, la carotte 22 n'est plus solidaire du panneau 1. Du fait du jeu J obtenu grâce à l'excentration des dents 10 et 12 de l'outil, aucune force ne s'oppose à la détente du ressort 42. La tige d'éjection 40 éjecte donc la carotte 22 en dehors du corps 2 de l'outil.

On précise que l'outil selon l'invention peut être utilisé aussi bien sur une perceuse de précision, qu'avec une simple chignole à main.

## Revendications

1. Outil à trépaner de précision pour panneaux en matériau sandwich ayant :
- un axe de rotation $(X, X')$ ;
- un corps (2) tubulaire ayant la forme globale d'un cylindre de révolution autour de l'axe de rotation $(X, X')$ ;
- des moyens de fixation (4, 26, 32) de l'outil sur une machine à trépaner ou à percer, ces moyens de fixation (4) étant solidaires du corps (2) par une première extrémité (6) du corps (2) ; et
- des dents (10, 12) placées à une deuxième extrémité (8) du corps (2) dans le prolongement du corps (2) et possédant des arêtes coupantes (18) pour usiner le matériau sandwich, chaque dent (10, 12) possédant une largeur de coupe $(E_1, E_2)$ déterminée, l'outil étant caractérisé en ce que la largeur de coupe $(E_1, E_2)$ de chaque dent (10, 12) est très faible, afin d'éviter un usinage par enlèvement frontal de copeaux.

2. Outil selon la revendication 1, caractérisé en ce que chaque dent (10, 12) a une profondeur de dent (H) égale à au moins 5 mm) favorisant un usinage par cisaillement, obtenu en combinaison avec une grande vitesse d'avance de l'outil en profondeur.

3. Outil selon la revendication 1 ou 2, caractérisé en ce que la paroi externe de chaque dent (10, 12) comprend :
- une première partie (16) parallèle à l'axe de rotation $(X, X')$, suivie d'une deuxième partie (17) se prolongeant sur le corps (2) et formant un faible angle de dépouille (B) afin d'éviter le frottement de l'outil contre le matériau du panneau usiné.

4. Outil selon la revendication 1, caractérisé en ce que l'ensemble des dents (10, 12) et du corps (2) définit un diamètre intérieur (d) excentré de quelques dixièmes de millimètre par rapport à l'axe de rotation $(X, X')$, afin de faciliter la libération de la carotte (22) résultant d'une opération de trépanage.

5. Outil selon la revendication 1, caractérisé en ce que chaque dent (10, 12) possède une arête transversale de coupe (18) inclinée vers le centre de l'outil.

6. Outil selon la revendication 1, caractérisé en ce qu'il est en acier rapide du type M35.

7. Outil selon la revendication 6, caractérisé en ce qu'il est doté d'un revêtement en nitrure de titane.

8. Outil selon la revendication 1, caractérisé en ce que les moyens de fixation sont constitués d'un manchon taraudé (26), destiné à recevoir un cône morse (24) de fixation dans une broche de machine-outil.

9. Outil selon la revendication 1, caractérisé en ce que les moyens de fixation sont constitués d'un téton fileté (32) destiné à recevoir un cône de fixation, à 120°, sur une butée micromécanique.

10. Outil selon la revendication 4, caractérisé en ce qu'il comprend des moyens d'éjection (40, 42) placés dans le téton de fixation (32), destiné à éjecter la carotte (22) issue de l'opération de trépanage.

FIG. 1

FIG. 2

FIG. 3

FIG. 4

24

30    28

26

2

FIG. 5

34    38

32

2

36

44    42

32    48

46    40

2    1

J

10    12

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A- 904 860 (WAFFENWERKE BRÜNN AG) * tout le document * | 1-3,5,6 ,10 | B 23 B 51/04 |
| A | | 8,9 | |
| Y | FR-A-1 147 075 (M.P. LEGRAND) * page 2, colonne de gauche, ligne 4 - page 2, colonne de droite, ligne 55<, figures 1-6 * | 1-6,8- 10 | |
| Y | GB-A-1 242 829 (UKRAINSKY NAUCHNOISSLEDOVATELSKY KONSTRUKTURSKOTEKHNOLOGIEHESKY INSTITUT) * revendication 1; figures 1-3 * | 1-6,8- 10 | |
| A | DD-A- 230 455 (VEB MASCHINENFABRIK UND EISENGIESSEREI) * tout le document * | 1,4,6-9 | |
| A | GB-A-2 088 755 (KABUSHIKI KAISHA MIYANAGA) * résumé; page 2, lignes 7-33; figures 4a,4b * | 1-3,5-9 | DOMAINES TECHNIQUES RECHERCHES (Int. Cl.5) B 23 B |
| A,D | EP-A-0 105 935 (THE BOEING COMPANY) * résumé; figures 1-8 * | 1-3,5-9 | |

Le présent rapport a été établi pour toutes les revendications

| Lieu de la recherche | Date d'achèvement de la recherche | Examinateur |
|---|---|---|
| BERLIN | 12-03-1990 | CUNY J M J C |